# EUROPEAN PATENT APPLICATION

(11) **EP 3 922 663 A1**
(43) Date of publication of application: **15.12.2021**
(21) Application number: 20752070.1
(22) Date of filing: 16.01.2020
(51) Int. Cl.: C08G 77/46, C08K 5/541, C09K 3/10, C08L 71/00, C08K 3/00

(54) **ROOM TEMPERATURE-CURABLE COMPOSITION HAVING EXCELLENT SILICONE OIL RESISTANCE, AND COOLANT SEALING MATERIAL FOR MOTOR VEHICLE**

(30) Priority: 08.02.2019 JP 2019021405
(71) Applicant: SHIN-ETSU CHEMICAL CO., LTD., Tokyo 100-0004 (JP)
(72) Inventor: UTA, Akira, Annaka-shi, Gunma 379-0224 (JP); KATAYAMA,Taiki, Annaka-shi, Gunma 379-0224 (JP); SAKAMOTO Takafumi, Annaka-shi, Gunma 379-0224 (JP)
(74) Representative: Mewburn Ellis LLP
(86) International application number: PCT/JP2020/001311
(87) International publication number: WO 2020/162132

(57) **Abstract**

This room temperature-curable composition contains: (A) a prescribed polyoxyalkylene compound which has two reactive silicon groups (silyl groups having 1 hydroxy group or 1-3 organo-oxy groups) per molecule, with one reactive silicon group at each molecular chain terminal, and in which the main chain is a prescribed polyoxyalkylene-based polymer; (B) an inorganic filler; (C) a hydrolyzable (organo)silane compound and/or a partial hydrolytic condensation product thereof as a curing agent; (D) a silane coupling agent; and (E) a curing catalyst. Produced by this configuration is a cured product which exhibits excellent silicone oil resistance, excellent curing properties and good elongation and adhesive properties.

## Description

### TECHNICAL FIELD

The present invention relates to a room temperature-curable composition having excellent silicone oil resistance that can be suitably used for sealing automotive coolants. More particularly, the invention relates to a room temperature-curable composition which gives a cured product that, along with having excellent adhesion, has an excellent curability, good strength and elongation, and silicone oil resistance. The invention relates further to an automotive coolant sealing material made thereof.

### BACKGROUND ART

Gaskets and packings made of cork, organic rubber, asbestos and other materials have hitherto been used as sealing materials around automotive coolants. However, a disadvantage of these conventional gaskets and packings is that the associated inventory control and work processes are cumbersome. In addition, the sealing performances of these products are unreliable. For this reason, the formed-in-place gasket (FIPG) process which uses a room temperature-curable organopolysiloxane composition as a liquid gasket is employed in coolant sealing applications.

The number of electrical components used in automobiles has increased with the electrification of automobiles in recent years, and so coolants composed primarily of silicone oils such as polydimethylsiloxane oil which have excellent electrical insulating properties, chemical stability, heat resistance and cold resistance are being adapted for use as coolants for electrical components.

Art relating to FIPGs that seal silicone oils such as polydimethylsiloxane has been reported in the past. However, the inventors have found from their investigations that it is difficult to achieve sufficient sealing properties with the room temperature-curable organopolysiloxane compositions that have been reported to date.

The prior-art relating to this invention includes the following literature.

### PRIOR ART DOCUMENTS

### PATENT DOCUMENTS

Patent Document 1: JP-A 2002-226708

### SUMMARY OF INVENTION

### TECHNICAL PROBLEM

The present invention was conceived in light of the above circumstances. One object of the invention is to provide a room temperature-curable composition that can be suitably used for sealing an automotive coolant when polydimethylsiloxane serves as the coolant, particularly one which, along with having an excellent silicone oil resistance, gives a cured product having excellent curability and good elongation and adhesion. Another object is to provide an automotive coolant sealing material which can be obtained by curing the composition.

### SOLUTION TO PROBLEM

The inventors have conducted extensive investigations in order to achieve these objects. As a result, they have discovered that by using a given polyoxyalkylene compound which has at least two reactive silicon groups per molecule at terminal positions on the molecular chain (especially at both ends of the molecular chain) and whose main chain is a polyoxyalkylene polymer as the base polymer of a room temperature-curable composition, the silicone oil resistance is greatly improved compared with polydimethylsiloxane-based room-temperature curable compositions.

Accordingly, the present invention provides the following room temperature-curable composition having an excellent silicone oil resistance, and the following automotive coolant sealing material obtained by curing the composition.
[1] A room temperature-curable composition which includes:
   (A) 100 parts by weight of a polyoxyalkylene compound of structural formula (1) or (2) below 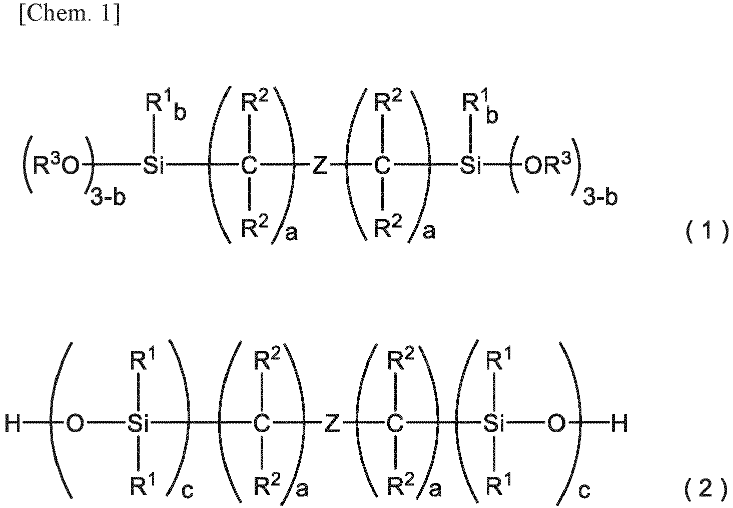 (wherein R¹ and R³, each of which may be the same or different, are substituted or unsubstituted monovalent hydrocarbon groups of 1 to 20 carbon atoms; each R² is independently a substituted or unsubstituted monovalent hydrocarbon group of 1 to 20 carbon atoms or a hydrogen atom; each occurrence of 'a' is independently an integer of 2 or more; each occurrence of 'b' is independently 0, 1 or 2; each occurrence of 'c' is independently an integer of 1 or more; and Z is a polyoxyalkylene polymer serving as a main chain);
   (B) from 1 to 500 parts by weight of an inorganic filler;
   (C) from 0.1 to 30 parts by weight of a hydrolyzable (organo)silane compound of general formula (3) below and/or a partial hydrolytic condensate thereof

      R⁴_{d}SiX_{4-d} (3)

      (wherein R⁴ is an unsubstituted monovalent hydrocarbon group, X is a hydrolyzable group, and 'd' is 0 or 1);
   (D) from 0.01 to 10 parts by weight of a silane coupling agent of general formula (4) below and/or a partial hydrolytic condensate thereof

      R⁵R⁷ₑSi(OR⁶)₃₋ₑ (4)

      (wherein R⁵ is a monovalent hydrocarbon group of 1 to 20 carbon atoms which has at least one functional group containing one or more atom selected from the group consisting of nitrogen, sulfur and oxygen atoms; R⁶ and R⁷ are each independently a substituted or unsubstituted monovalent hydrocarbon group of 1 to 10 carbon atoms; and 'e' is 0, 1 or 2); and
   (E) from 0.1 to 10 parts by weight of a curing catalyst.
[2] The room temperature-curable composition of [1], wherein X in formula (3) is an alkoxy or alkoxyalkoxy group when component (A) is a compound of formula (1), and is a ketoxime, alkoxy, alkoxyalkoxy, acyloxy or alkenyloxy group when component (A) is a compound of formula (2).
[3] The room temperature-curable composition of [1] or [2], wherein Z in formula (1) or (2) is a polyoxyalkylene polymer of formula (6) below 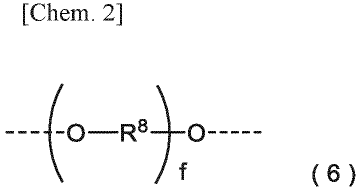 (wherein each R⁸, which may be the same or different, is a divalent hydrocarbon group; 'f' is an integer of 2 or more; and the dashed lines represent sites available for bonding).
[4] The room temperature-curable composition of any of [1] to [3], wherein the polyoxyalkylene compound (A) has a number-average molecular weight of from 500 to 100,000.
[5] The room temperature-curable composition of any of [1] to [4], wherein the inorganic filler (B) is of at least one type selected from the group consisting of calcium carbonate, fumed silica, precipitated silica, carbon black and aluminum oxide that has been treated with a surface treatment agent.
[6] The room temperature-curable composition of any of [1] to [5] for sealing an automotive coolant.
[7] An automotive coolant sealing material which includes a cured form of the room temperature-curable composition for sealing an automotive coolant of [6].

### ADVANTAGEOUS EFFECTS OF INVENTION

The present invention makes it possible to provide room temperature-curable compositions which, along with having an excellent silicone oil resistance, give cured products of excellent curability and good elongation and adhesion. The invention also makes it possible to provide automotive coolant sealing materials obtained by curing such compositions.

### DESCRIPTION OF EMBODIMENTS

The invention is described in detail below.

### [Component (A)]

Component (A) of the inventive room temperature-curable composition having an excellent silicone oil resistance, which serves as the base polymer of the composition, is a preferably linear polyoxyalkylene compound of structural formula (1) or (2) below which has two reactive silicon groups (i.e., silyl groups having one hydroxyl group or one to three organooxy groups) per molecule, one at each end of the molecular chain, and a main chain that is a polyoxyalkylene polymer. 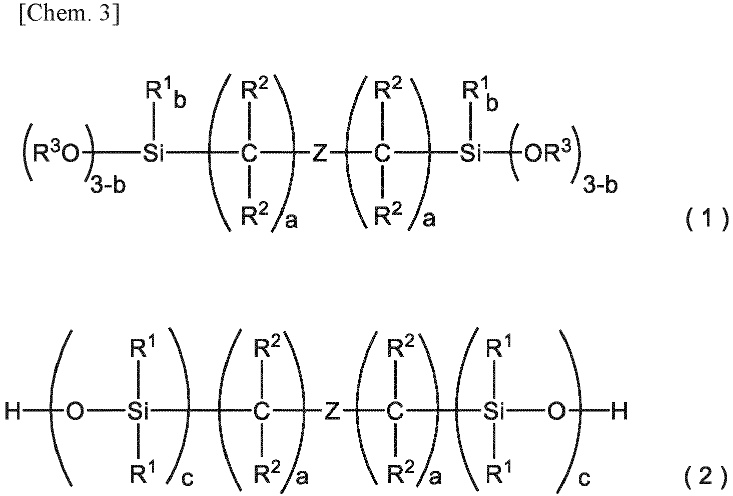 In the formulas, R¹ and R³, each of which may be the same or different, are substituted or unsubstituted monovalent hydrocarbon groups of 1 to 20 carbon atoms; each R² is independently a substituted or unsubstituted monovalent hydrocarbon group of 1 to 20 carbon atoms or a hydrogen atom; each occurrence of 'a' is independently an integer of 2 or more; each occurrence of 'b' is independently 0, 1 or 2; each occurrence of 'c' is independently an integer of 1 or more; and Z is a polyoxyalkylene polymer serving as the main chain.

In formula (1), R¹ and R³ are substituted or unsubstituted monovalent hydrocarbon groups of 1 to 20 carbon atoms, preferably 1 to 10 carbon atoms, and more preferably 1 to 6 carbon atoms. Examples of R¹ and R³ include alkyl groups such as methyl, ethyl, n-propyl, isopropyl, n-butyl, isobutyl, tert-butyl, pentyl, neopentyl, hexyl, heptyl, octyl, nonyl, decyl, undecyl, dodecyl, tridecyl, tetradecyl, pentadecyl, hexadecyl, heptadecyl, octadecyl, nonadecyl and eicosyl groups; cycloalkyl groups such as cyclopentyl and cyclohexyl groups; alkenyl groups such as vinyl, allyl, propenyl, isopropenyl, butenyl, pentenyl and hexenyl groups; aryl groups such as phenyl, tolyl, xylyl and α- and β-naphthyl groups; aralkyl groups such as benzyl, 2-phenylethyl and 3-phenylpropyl groups; and any of these groups in which some or all hydrogen atoms are substituted with halogen atoms such as fluorine, chlorine and bromine or cyano groups, examples of which include 3-chloropropyl, 3,3,3-trifluoropropyl and 2-cyanoethyl groups. Methyl and phenyl groups are preferred, and methyl groups are especially preferred. The R¹ and R³ may be the same groups or may be different groups.

In formula (1), R² is a substituted or unsubstituted monovalent hydrocarbon group of 1 to 20 carbon atoms, preferably 1 to 10 carbon atoms, and more preferably 1 to 6 carbon atoms. Examples of R² include alkyl groups such as methyl, ethyl, n-propyl, isopropyl, n-butyl, isobutyl, tert-butyl, pentyl, neopentyl, hexyl, heptyl, octyl, nonyl, decyl, undecyl, dodecyl, tridecyl, tetradecyl, pentadecyl, hexadecyl, heptadecyl, octadecyl, nonadecyl and eicosyl groups; cycloalkyl groups such as cyclopentyl and cyclohexyl groups; alkenyl groups such as vinyl, allyl, propenyl, isopropenyl, butenyl, pentenyl and hexenyl groups; aryl groups such as phenyl, tolyl, xylyl and α- and β-naphthyl groups; aralkyl groups such as benzyl, 2-phenylethyl and 3-phenylpropyl groups; any of these groups in which some or all hydrogen atoms are substituted with halogen atoms such as fluorine, chlorine and bromine or cyano groups, examples of which include 3-chloropropyl, 3,3,3-trifluoropropyl and 2-cyanoethyl groups; and hydrogen atoms. Methyl groups, phenyl groups and hydrogen atoms are preferred, and methyl groups and hydrogen atoms are especially preferred. These R² groups may be the same or may be different groups.

Also, in formulas (1) and (2), respectively, each occurrence of 'a' is independently an integer of 2 or more, preferably an integer from 2 to 8, more preferably 2, 3 or 4, and most preferably 3.

Each occurrence of 'b' in formula (1) is independently 0, 1 or 2, preferably 0 or 1, and most preferably 1.

Each occurrence of 'c' in formula (2) is independently an integer of 1 or more, preferably an integer from 1 to 20, and more preferably an integer from 1 to 10.

The main chain skeleton Z of the polyoxyalkylene compounds of general formula (1) and (2) preferably includes repeating structures that are divalent organooxy units (e.g., oxyalkylene groups) of general formula (5) below

-R⁸-O- (5)

(wherein R⁸ is a divalent hydrocarbon group).

R⁸ is not particularly limited so long as it is a divalent hydrocarbon group (especially an aliphatic divalent hydrocarbon group), although a linear or branched-chain alkylene group of 1 to 14 carbon atoms is preferred. A linear or branched chain alkylene group of 2 to 4 carbon atoms is more preferred.

Examples of the recurring units of formula (5) include, without particular limitation, oxyalkylene groups such as -CH₂O-, -CH₂CH₂O-, -CH₂CH₂CH₂O-, -CH₂CH(CH₃)O-, -CH₂CH(CH₂CH₃)O-, -CH₂C(CH₃)₂O- and -CH₂CH₂CH₂CH₂O-.

Of the recurring units of formula (5), the oxyalkylene polymer main chain skeleton may be made up of one type, or of two or more types, of recurring unit. In particular, when used in the present application, a polymer in which the primary constituent is propylene oxide (-CH₂CH(CH₃)O-) is preferred. As used herein, "primary constituent" means that more than half of the number of recurring units, preferably at least 70 mol% (70 to 100 mol%), more preferably at least 90 mol% (90 to 100 mol%), and most preferably 100 mol% (i.e., all of the recurring units), are -CH₂CH(CH₃)O-.

In formula (1), Z is a polyoxyalkylene polymer serving as the main chain (i.e., a divalent polyoxyalkylene residue constituting the main chain of the compound represented by formula (1)). It is preferably one which includes divalent organooxy unit (e.g., oxyalkylene group) recurring structures of formula (5), and is exemplified by ones of general formula (6) below. 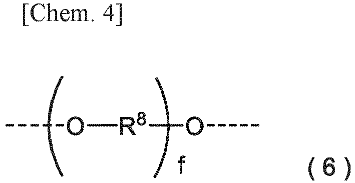 In this formula, R⁸ is as defined above, may at each occurrence be the same or different, and is preferably a linear or branched-chain alkylene group of 1 to 14 carbon atoms, and more preferably a linear or branched-chain alkylene group of 2 to 4 carbon atoms; 'f' is an integer of 2 or more, preferably an integer from 20 to 500, more preferably an integer from 40 to 450, and even more preferably an integer from 100 to 400; and the dashed lines are sites available for bonding.

The polyoxyalkylene compound with two reactive silicon groups (i.e., silyl groups having one hydroxyl group or 1 to 3 organooxy groups) per molecule, one at each end of the molecular chain, and a main chain that is a polyoxyalkylene polymer serving as component (A) in this invention has a viscosity at 23°C which is preferably about 1,000 to 1,000,000 mPa·s, more preferably about 2,000 to 80,000 mPa·s, and even more preferably about 5,000 to 50,000 mPa·s. When the polyoxyalkylene compound of component (A) has a viscosity at 23°C that is 1,000 mPa·s or more, sufficient flexibility can be imparted to the cured rubber; at a viscosity of 1,000,000 mPa·s or less, the viscosity of the composition is not too high and the workability is good. Here, the viscosity is the numerical value obtained with a rotational viscometer (such as a BL, BH, BS or cone/plate-type viscometer, or a rheometer; the same applies below).

The polyoxyalkylene compound with two reactive silicon groups (i.e., silyl groups having one hydroxyl group or 1 to 3 organooxy groups) per molecule, one at each end of the molecular chain, and a main chain that is a polyoxyalkylene polymer serving as component (A) in this invention is preferably linear and the number-average molecular weight is generally from about 500 to about 100,000, preferably from about 1,000 to about 50,000, and more preferably from about 1,000 to about 40,000.

Here and below, the molecular weight or degree of polymerization (number of recurring oxyalkylene units) can be determined as the polystyrene-equivalent number-average molecular weight (or number-average degree of polymerization) in gel permeation chromatographic (GPC) analysis using tetrahydrofuran (THF) or the like as the developing solvent.

Also, in this invention, a polyoxyalkylene compound (polyoxyalkylene structure) that is "linear" means that the divalent oxyalkylene groups serving as the recurring units making up the polyoxyalkylene structure are linearly attached to each other; the individual oxyalkylene groups themselves may be linear or may be branched (e.g., propylenoxy groups such as -CH₂CH(CH₃)O-).

The polyoxyalkylene compound of formula (1) (i.e., the polyoxyalkylene compound modified at both ends of the molecular chain with organooxy group-containing silyl moieties) is exemplified by the compounds shown below 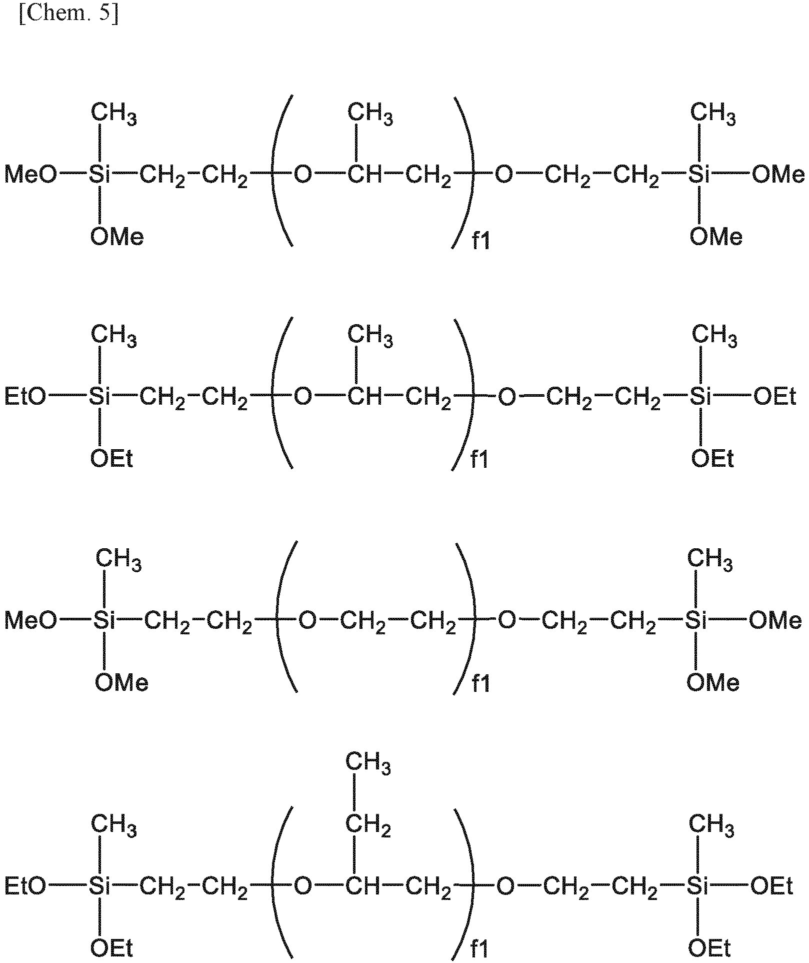 (wherein Me and Et stand for, respectively, a methyl group and an ethyl group, and f1 is the same as f).

The polyoxyalkylene compound of formula (2) (i.e., the polyoxyalkylene compound modified at both ends of the molecular chain with silanol group-containing siloxane moieties) is exemplified by the compounds shown below 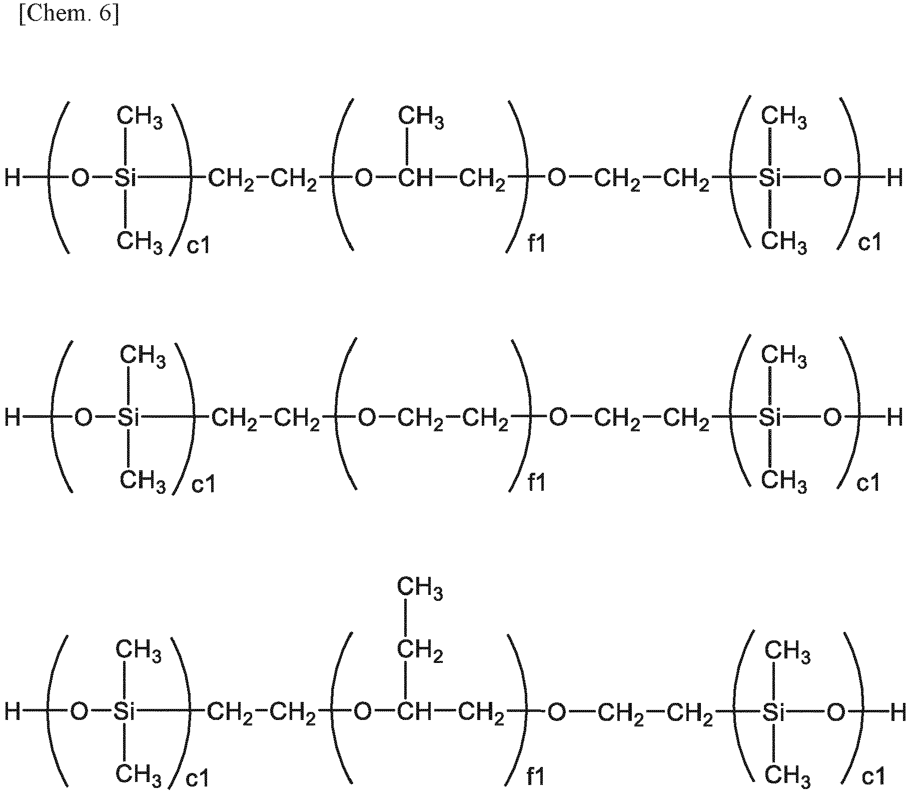 (wherein c1 is the same as c, and f1 is the same as f).

The polyoxyalkylene compound may be used singly or two or more may be used together.

A known material may be used as the polyoxyalkylene compound of formula (1). Alternatively, a commercially available product such as MS Polymer from Kaneka Corporation may be used.

### <Method of Preparing Polyoxyalkylene Compound having Structure Shown in Formula (2)>

The terminal silanol group-containing polyoxyalkylene compound of formula (2) can be easily prepared by carrying out, for example, a hydrosilylation addition reaction between an organosilane or organopolysiloxane compound (silicon compound) of formula (7) below having a silicon-bonded hydrogen atom (Si-H group) at one end of the molecular chain and a silicon-bonded hydroxyl group (silanol group) at the other end and a polyoxyalkylene compound of formula (8) below capped at both ends of the molecular chain with alkenyl groups. 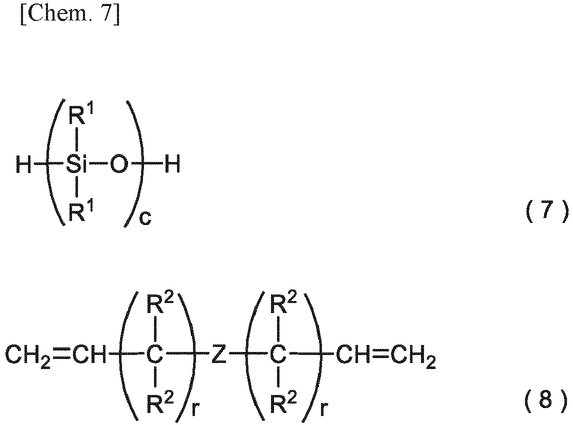 (wherein R¹, R², Z, and c are as defined above; and 'r' is 0 or more, preferably from 0 to 6, more preferably 0, 1 or 2, and most preferably 1)

Specific examples of the silicon compound of formula (7) include, but are not limited to, ones having the following structural formulas (wherein Ph is a phenyl group). Silicon compounds that include a Si-H group at one end of the molecular chain and a Si-OH group at the other end may be used.

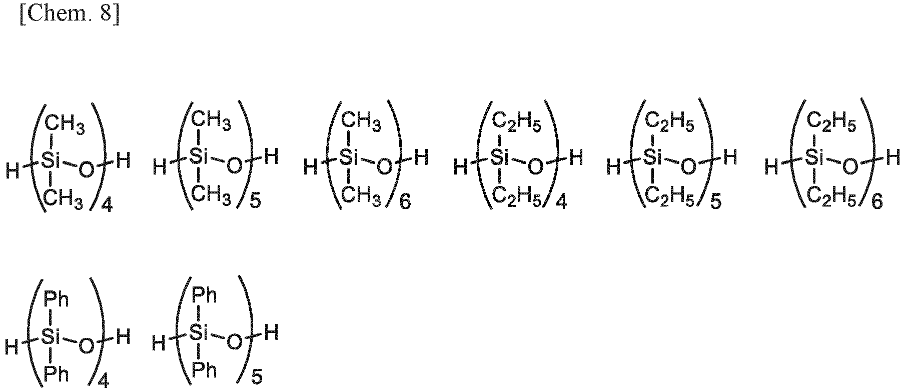

Specific examples of the polyoxyalkylene polymer of formula (8) capped at both ends of the molecular chain with alkenyl groups include, but are not limited to, those having the structural formulas shown below (wherein 'f' is the same as above). So long as this is a polyoxyalkylene polymer capped at both ends with alkenyl groups, it may be used.

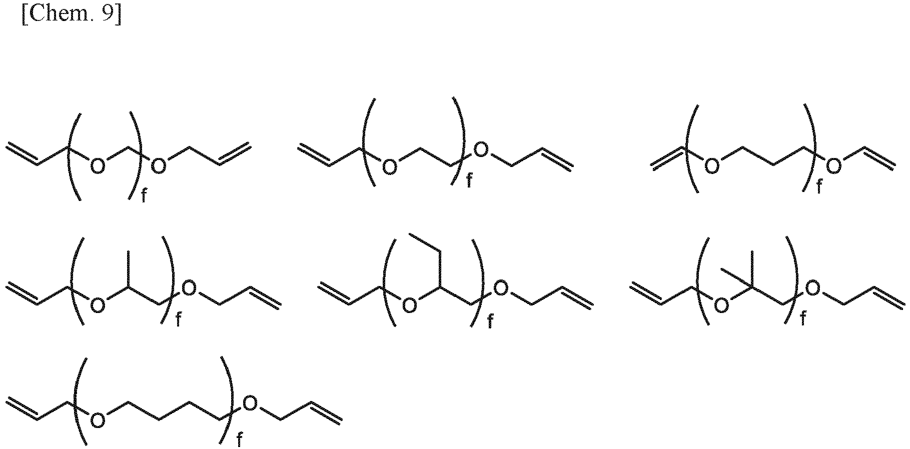

The molecular weight (in particular, the number-average molecular weight) of the polyoxyalkylene polymer of formula (8) is generally from about 450 to about 99,000, preferably from about 950 to about 45,000, and more preferably from about 950 to about 35,000. When the molecular weight of the polyoxyalkylene polymer of formula (8) is too small, the physical properties of the cured product after curing may be inadequate; when the molecular weight is too large, not only does the viscosity become extremely high and the workability worsen, the curability of the cured product may also decrease.

The reaction ratio between the silicon compound of formula (7) and the polyoxyalkylene polymer of formula (8), expressed as the molar ratio of the Si-H groups on the silicon compound of formula (7) to the alkenyl groups on the polyoxyalkylene polymer of formula (8), is set to preferably from about 0.8 to about 1.5 (mol/mol), and especially from about 0.9 to about 1.1 (mol/mol). When this molar ratio is too small, the cured product after curing may not completely cure and so the rubber properties may not be fully attainable. At a molar ratio that is too large, the rubber strength after curing may decrease, making rubber elasticity difficult to achieve; this may be disadvantageous in terms of cost as well.

The addition reaction catalyst used when carrying out this addition reaction on the silicon compound is exemplified by platinum metal catalysts, such as platinum, palladium, rhodium and ruthenium catalysts. Platinum catalysts are especially preferred. Examples of such platinum catalysts include platinum black or those obtained by supporting solid platinum on a support such as alumina or silica, chloroplatinic acid, alcohol-modified chloroplatinic acid, complexes of chloroplatinic acid and olefins, and complexes of platinum and vinyl siloxane.

The amount in which these platinum metal catalysts are used may be the so-called catalytic amount. For example, they are preferably used in a weight, expressed as the weight of platinum metal relative to the total weight of the silicon compound of formula (7) and the polyoxyalkylene polymer of formula (8), which is from 0.1 to 1,000 ppm, and especially from 0.5 to 100 ppm.

It is desirable to carry out the reaction at a temperature of between 50°C and 120°C, especially between 60°C and 100°C, for a period of from 0.5 to 12 hours, especially from 1 to 6 hours. The reaction may be carried out without using a solvent, although a suitable solvent such as toluene or xylene may be optionally used, insofar as doing so does not adversely affect the addition reaction, etc.

This reaction, in cases where, for example, a polyoxypropylene capped at both ends of the molecular chain with allyl groups is used as the alkenyl group-capped polyoxyalkylene polymer, is shown in formula [I] below. 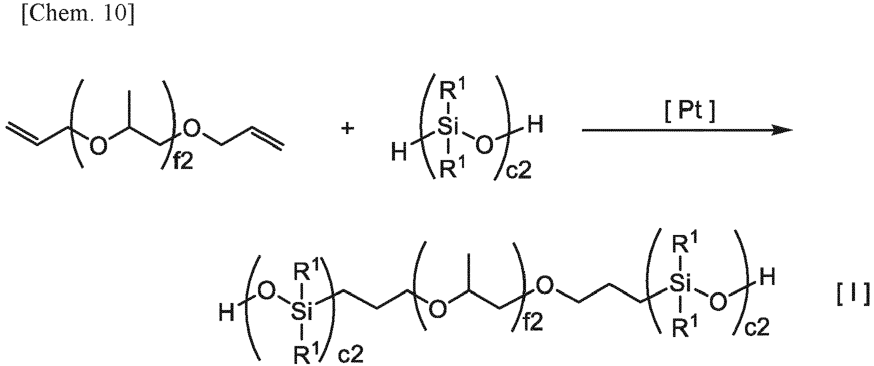 Here, R¹ is as defined above, f2 is an integer of 2 or more, and c2 is an integer of 1 or more.

### [Component (B)]

Next, the inorganic filler serving as component (B) is a reinforcing filler or non-reinforcing filler for imparting rubber properties to the composition. This filler is exemplified by surface-treated or untreated silica fillers, including dry silicas such as pyrogenic silica and fumed silica and wet silicas such as precipitated silica and sol-gel silica, carbon black, talc and bentonite, surface-treated or untreated calcium carbonate (ground calcium carbonate, precipitated calcium carbonate), zinc carbonate and magnesium carbonate; and surface-treated or untreated calcium oxide, zinc oxide, magnesium oxide, aluminum oxide and aluminum hydroxide. Of these, calcium carbonate, fumed silica, precipitated silica, carbon black and aluminum oxide are preferred. Calcium carbonate, fumed silica, precipitated silica, carbon black and aluminum oxide in which the surface of the inorganic filler has been hydrophobized by surface treatment are more preferred. In this case, these inorganic fillers preferably have a low moisture content.

Although no particular limitations are imposed on the type and amount of the surface treatment agent, the treatment method and the like, suitable use can typically be made of organosilicon compounds such as chlorosilanes, alkoxysilanes and organosilazanes, and other treatment agents such as fatty acids, paraffin, silane coupling agents and titanium coupling agents.

The amount of component (B) included per 100 parts by weight of the polyoxyalkylene compound serving as component (A) is in the range of from 1 to 500 parts by weight, and preferably from 20 to 300 parts by weight. At less than 1 part by weight, a sufficient rubber strength cannot be obtained, making the composition unsuitable for use in the intended applications; at more than 500 parts by weight, the ability to discharge the composition from a cartridge worsens, the storage stability decreases, and the mechanical properties among the rubber properties obtained also declines. The inorganic filler serving as component (B) may be of one type used alone or two or more may be used together.

### [Component (C)]

Component (C) used in the room temperature-curable composition of the invention is a compound which acts as a crosslinking agent (curing agent), this being a hydrolyzable (organo)silane compound having at least three silicon-bonded hydrolyzable groups per molecule other than component (A) and subsequently described component (D), and/or a partial hydrolytic condensate thereof. The hydrolyzable (organo)silane compound is preferably a hydrolyzable (organo)silane compound of general formula (3) below and/or a partial hydrolytic condensate thereof (i.e., an organosiloxane oligomer having at least two, preferably three or more, remaining hydrolyzable groups on the molecule that is formed by partial hydrolytic condensation of the organosilane compound).

R⁴_{d}SiX_{4-d} (3)

(wherein R⁴ is an unsubstituted monovalent hydrocarbon group; X is a hydrolyzable group; and d is 0 or 1, and preferably 1).

In general formula (3), the hydrolyzable groups X in general formula (3) are, for example, alkoxy or alkoxyalkoxy groups when component (A) is a compound of formula (1), and are, for example, ketoxime, alkoxy, alkoxyalkoxy, acyloxy or alkenyloxy groups when component (A) is a compound of formula (2). Specific examples include ketoxime groups of 3 to 8 carbon atoms such as dimethyl ketoxime, diethyl ketoxime, methyl ethyl ketoxime and methyl isobutyl ketoxime groups; alkoxy groups of 1 to 4, preferably 1 or 2, carbon atoms such as methoxy, ethoxy, propoxy, isopropoxy, butoxy, isobutoxy, sec-butoxy and tert-butoxy groups; alkoxyalkoxy groups of 2 to 4 carbon atoms such as methoxymethoxy and methoxyethoxy groups; acyloxy groups of 2 to 4 carbon atoms such as acetoxy and propionoxy groups; and alkenyloxy groups of 2 to 4 carbon atoms such as vinyloxy, allyloxy, propenoxy and isopropenoxy groups.

The remaining silicon atom-bonded groups R⁴ other than the hydrolyzable groups are not particularly limited, so long as they are unsubstituted monovalent hydrocarbon groups. Specific examples include unsubstituted monovalent hydrocarbon groups of 1 to 10 carbon atoms, including alkyl groups such as methyl, ethyl, propyl and butyl groups, alkenyl groups such as the vinyl group, and aryl groups such as the phenyl group. Of these, methyl, ethyl, vinyl and phenyl groups are preferred.

Specific examples of this component (C) include ketoxime silanes such as tetrakis(methyl ethyl ketoxime)silane, methyltris(dimethyl ketoxime)silane, methyltris(methyl ethyl ketoxime)silane, ethyltris(methyl ethyl ketoxime)silane, methyltris(methyl isobutyl ketoxime)silane and vinyltris(methyl ethyl ketoxime)silane; alkoxysilanes such as methyltrimethoxysilane, vinyltrimethoxysilane, phenyltrimethoxysilane, tetramethoxysilane, vinyltriethoxysilane and tetraethoxysilane; acetoxysilanes such as methyltriacetoxysilane and vinyltriacetoxysilane; isopropenoxysilanes such as methyltriisopropenoxysilane, vinyltriisopropenoxysilane (also known as vinyltris(isopropenoxy)silane) and phenyltriisopropenoxysilane; and partial hydrolytic condensates of these silanes. These may be used singly or two or more may be used together.

Component (C) is clearly differentiated from the subsequently described component (D) in that it has no monovalent hydrocarbon groups with functional groups that include heteroatoms such as nitrogen, oxygen and sulfur.

Component (C) is included in an amount per 100 parts by weight of the polyoxyalkylene compound serving as component (A) that is from 0.1 to 30 parts by weight, preferably from 1 to 25 parts by weight, and more preferably from 5 to 20 parts by weight. At less than 0.1 part by weight, sufficient crosslinking is not achieved and it is difficult to obtain a composition having the target rubber elasticity; at more than 30 parts by weight, the resulting cured product tends to have decreased mechanical properties.

### [Component (D)]

Next, component (D) is a silane coupling agent of general formula (4) below (i.e., a hydrolyzable organosilane compound having a functional group-containing monovalent hydrocarbon group) and/or a partial hydrolytic condensate thereof. This is an essential ingredient for manifesting good adhesion in the room temperature-curable composition of the invention.

R⁵R⁷ₑSi(OR⁶)₃₋ₑ (4)

In the formula, R⁵ is a monovalent hydrocarbon group of 1 to 20 carbon atoms which has at least one functional group containing one or more atom selected from nitrogen, sulfur and oxygen atoms; R⁶ and R⁷ are each independently a substituted or unsubstituted monovalent hydrocarbon group of 1 to 10 carbon atoms; and 'e' is 0, 1 or 2.

In formula (4), R⁵ is a monovalent hydrocarbon group of 1 to 20 carbon atoms having at least one functional group containing an atom selected from nitrogen, sulfur and oxygen atoms (e.g., substituted or unsubstituted amino groups, substituted or unsubstituted imino groups, amide groups, ureido groups, mercapto groups, epoxy groups, (meth)acryloxy groups and isocyanate groups, exclusive of guanidyl groups). Specific examples include monovalent hydrocarbon groups of 3 to 20 carbon atoms, especially 8 to 14 carbon atoms, having at least one atom selected from nitrogen, sulfur and oxygen atoms, such as β-(2,3-epoxycyclohexyl)ethyl, β-(3,4-epoxycyclohexyl)ethyl, γ-glycidoxypropyl, γ-(meth)acryloxypropyl, γ-acryloxypropyl, N-β-(aminoethyl)-γ-aminopropyl, γ-aminopropyl, N-phenyl-γ-aminopropyl, γ-ureidopropyl, γ-mercaptopropyl, γ-isocyanatopropyl and γ-isocyanatopropyl groups.

R⁶ and R⁷ are each independently a substituted or unsubstituted monovalent hydrocarbon group of 1 to 10 carbon atoms, especially 1 to 6 carbon atoms. Methyl, ethyl, propyl and isopropyl groups are especially preferred.

The silane coupling agent and/or partial hydrolytic condensate thereof serving as component (D) may be of one type used alone or two or more may be used together.

The content of component (D) per 100 parts by weight of the polyoxyalkylene compound serving as component (A) is from 0.01 to 10 parts by weight, and preferably from 0.1 to 7 parts by weight. At less than 0.01 part by weight, the cured product does not exhibit a sufficient adhesive performance; when more than 10 parts by weight is included, the rubber strength after curing may decrease or the curability may decline.

### [Component (E)]

Component (E) used in the room temperature-curable composition of the invention is a curing catalyst. Curing catalysts that have hitherto been commonly used as curing promoters for moisture (condensation)-curing compositions may be used as the curing catalyst. Examples include organotin compounds such as dibutyltin methoxide, dibutyltin diacetate, dibutyltin dioctoate, dibutyltin dilaurate, dioctyltin dilaurate, dioctyltin diversatate, dioctyltin dioctoate, dimethyltin dimethoxide and dimethyltin diacetate; organotitanium compounds such as tetrapropyl titanate, tetrabutyl titanate, tetra-2-ethylhexyl titanate and dimethoxytitanium diacetylacetonate; and amine compounds and salts thereof, excluding the silane coupling agents of components (D), such as hexylamine and tetramethylguanidylpropyltrimethoxysilane. These may be of one type used singly or two or more may be used in combination.

The content of component (E) is from 0.1 to 10 parts by weight, preferably from 0.2 to 8 parts by weight, and more preferably from 0.3 to 5 parts by weight, per 100 parts by weight of the polyoxyalkylene compound serving as component (A). When the component (E) content is less than the lower limit of 0.1 part by weight, a catalytic effect cannot be obtained. When the component (E) content is greater than the upper limit of 10 parts by weight, the adhesive properties of the room temperature-curable composition may decrease and the shelf stability may worsen.

Commonly known additives other than the above ingredients may be used in the inventive composition within ranges that do not detract from the objects of the invention. Examples of such additives include various plasticizers such as dimethyl phthalate, diethyl phthalate, di-n-butyl phthalate, heptyl phthalate, dioctyl phthalate, diisononyl phthalate, diisodecyl phthalate, ditridecyl phthalate, phthalic acid esters, diisodecyl adipate, di-n-alkyl adipate, dibutyl diglycol adipate, bis(2-ethylhexyl) azelate, dibutyl sebacate, dioctyl sebacate, dibutyl maleate, di-2-ethylhexyl maleate, dibutyl fumarate, tricresyl phosphate, triethyl phosphate, octyl diphenyl phosphate, triphenyl phosphate, octyl diphenyl phosphate, acetyl triethyl citrate, acetyl tributyl citrate, trimellitic acid plasticizers, polyester plasticizers, chlorinated paraffins and stearic acid plasticizers; and solvents such as toluene, xylene, volatile oils for solvent, cyclohexane, methylcyclohexane and low-boiling isoparaffin. These may be used singly or two or more may be used in combination.

As for the curing conditions of the room temperature-curable composition of the invention, a cured product (rubber sheet) having a thickness of 2 mm can be obtained by pouring the composition (room temperature-curable composition) into a 2 mm frame and curing it (leaving it at rest) for 7 days at 23°C and 50% RH

The room temperature-curable composition of the invention can be suitably used as a coolant sealing material when silicone oil is used as a coolant for cooling. In particular, it gives a silicone oil-resistant cured product having an excellent curability and also having good adhesion and elongation. Use as a sealing material for automotive cooling fluids is especially preferred.

In cases where the terminal silanol-containing polyoxyalkylene compound of formula (2) is used as component (A) in the room temperature-curable composition of the invention, not only alkoxy groups, but various curing agents (e.g., organosilicon compounds having hydrolyzable groups such as oxime, amide, aminoxy, acetic acid (acetoxy groups) and alcohol (alkoxy) groups) may be theoretically used as a crosslinking ingredient. This makes it possible to give various curing reaction (condensation reaction) type room temperature-curable compositions, enabling the curability (initial sealability) to be greatly improved.

### EXAMPLES

The invention is illustrated more fully below by way of Examples and Comparative Examples, although the invention is not limited by these Examples. In all of the Examples and Comparative Examples, a planetary mixer (Inoue Mfg., Inc.) was used as the mixer. Also, in the Examples below, unless noted otherwise, physical property values such as the viscosity (a measured value obtained with a rotational viscometer) are values obtained at 23°C.

### [Synthesis Example 1]

### <Synthesis of Disilanol-Terminated Siloxane-Modified Polyoxyalkylene Compound>

A one-liter four-neck separable flask equipped with a stirrer, a reflux condenser, a thermometer and a dropping funnel was charged with 600 g of a diallyl-terminated polypropylene glycol having a molecular weight of 23,000 (amount of terminal allyl groups as functional groups, 0.058 mol) and 2.4 g of a platinum catalyst (toluene solution of Karstedt catalyst; platinum concentration, 1 wt%), and the temperature was raised to 90°C under heating and stirring.

Next, 19.6 g of 1-hydroxy-octamethyltetrasiloxane (i.e., 1-hydroxy-7-hydrogen-1,1,3,3,5,5,7,7-octamethyltetrasiloxane) (amount of terminal Si-H groups as functional groups, 0.066 mol) was added dropwise and this reaction system was held at a reaction temperature of between 90 and 95°C for 6 hours. Following reaction completion, the system was cooled to room temperature, giving 570 g of a siloxane-modified polypropylene glycol having silanol groups at both ends of the molecular chain (a siloxane-modified polyoxyalkylene compound having silanol groups at both ends of the molecular chain wherein, in general formula (2), R¹= methyl groups, R² = hydrogen atoms, a = 3, c = 4, and Z is polyoxypropylene). The yield was 92%, the viscosity was 24,000 mPa·s, and the number-average molecular weight was 24,000.

### [Example 1]

One hundred parts by weight of (B) ground calcium carbonate surface-treated with a fatty acid (available under the trade name MC Coat P-20, from Maruo Calcium Co., Ltd.) was added to (A) 100 parts by weight of the disilanol-terminated siloxane-modified polypropylene glycol synthesized in Synthesis Example 1 and these were mixed together, following which 7 parts by weight of (C) vinyl tris(methyl ethyl ketoxime)silane was added and mixing was carried out under reduced pressure. Next, 3 parts by weight of (D) γ-aminopropyltrimethoxysilane (trade name, KBM-903, from Shin-Etsu Chemical Co., Ltd.) and 3 parts by weight of (E) dioctyltin diversatate were added and completely mixed under reduced pressure, giving Composition 1.

### [Example 2]

One hundred parts by weight of (B) ground calcium carbonate surface-treated with a fatty acid (available under the trade name MC Coat P-20, from Maruo Calcium Co., Ltd.) was added to (A) 100 parts by weight of the disilanol-terminated siloxane-modified polypropylene glycol synthesized in Synthesis Example 1 and these were mixed together, following which 6 parts by weight of (C) vinyl tris(isopropenoxy)silane was added and mixing was carried out under reduced pressure. Next, 1 part by weight of (D) γ-aminopropyltrimethoxysilane (trade name, KBM-903, from Shin-Etsu Chemical Co., Ltd.) and 3 parts by weight of (E) tetramethylguanidylpropyltrimethoxysilane were added and completely mixed under reduced pressure, giving Composition 2.

### [Example 3]

One hundred parts by weight of (B) ground calcium carbonate surface-treated with a fatty acid (available under the trade name MC Coat P-20, from Maruo Calcium Co., Ltd.) was added to (A) 100 parts by weight of the disilanol-terminated siloxane-modified polypropylene glycol synthesized in Synthesis Example 1 and these were mixed together, following which 6 parts by weight of (C) vinyltrimethoxysilane was added and mixing was carried out under reduced pressure. Next, 1 part by weight of (D) γ-aminopropyltrimethoxysilane (trade name, KBM-903, from Shin-Etsu Chemical Co., Ltd.) and 1 part by weight of (E) dioctyltin diversatate were added and completely mixed under reduced pressure, giving Composition 3.

### [Example 4]

One hundred parts by weight of (B) ground calcium carbonate surface-treated with a fatty acid (available under the trade name MC Coat P-20, from Maruo Calcium Co., Ltd.) was added to (A) 100 parts by weight of Kaneka MS Polymer S303H (a polypropylene glycol capped at both ends of the molecular chain with dimethoxy(methyl)silylpropyl groups; in general formula (1), R¹ = R³ = methyl groups, R² = hydrogen atoms, a = 3, b = 1, Z = polyoxypropylene); from Kaneka Corporation; number-average molecular weight, 17,500) and these were mixed together, following which 6 parts by weight of (C) vinyltrimethoxysilane was added and mixing was carried out under reduced pressure. Next, 1 part by weight of (D) γ-aminopropyltrimethoxysilane (trade name, KBM-903, from Shin-Etsu Chemical Co., Ltd.) and 3 parts by weight of (E) dioctyltin diversatate were added and completely mixed under reduced pressure, giving Composition 4.

### [Comparative Example 1]

One hundred parts by weight of (B) ground calcium carbonate surface-treated with a fatty acid (available under the trade name MC Coat P-20, from Maruo Calcium Co., Ltd.) was added to (A) 100 parts by weight of disilanol-terminated dimethylpolysiloxane having a viscosity of 20,000 mPa·s and these were mixed together, following which 7 parts by weight of (C) vinyltris(methyl ethyl ketoxime)silane was added and mixing was carried out under reduced pressure. Next, 1 part by weight of (D) γ-aminopropyltrimethoxysilane (trade name, KBM-903, from Shin-Etsu Chemical Co., Ltd.) and 0.1 part by weight of (E) dioctyltin diversatate were added and completely mixed under reduced pressure, giving Composition 5.

### [Comparative Example 2]

One hundred parts by weight of (B) ground calcium carbonate surface-treated with a fatty acid (available under the trade name MC Coat P-20, from Maruo Calcium Co., Ltd.) was added to (A) 100 parts by weight of disilanol-terminated dimethylpolysiloxane having a viscosity of 20,000 mPa·s and these were mixed together, following which 6 parts by weight of (C) vinyltris(isopropenoxy)silane was added and mixing was carried out under reduced pressure. Next, 0.1 part by weight of (D) γ-aminopropyltrimethoxysilane (trade name, KBM-903, from Shin-Etsu Chemical Co., Ltd.) and 1 part by weight of (E) tetramethylguanidylpropyltrimethoxysilane were added and completely mixed under reduced pressure, giving Composition 6.

### [Comparative Example 3]

One hundred parts by weight of (B) ground calcium carbonate surface-treated with a fatty acid (available under the trade name MC Coat P-20, from Maruo Calcium Co., Ltd.) was added to (A) 100 parts by weight of a disilanol-terminated dimethylpolysiloxane having a viscosity of 20,000 mPa·s and these were mixed together, following which 6 parts by weight of (C) vinyltrimethoxysilane was added and mixing was carried out under reduced pressure. Next, 1 part by weight of (D) γ-aminopropyltrimethoxysilane (trade name, KBM-903, from Shin-Etsu Chemical Co., Ltd.) and 0.1 part by weight of (E) dioctyltin diversatate were added and completely mixed under reduced pressure, giving Composition 7.

### [Test Method]

Compositions 1 to 7 prepared in the above Examples and Comparative Examples were each poured into frames having a depth of 2 mm and cured at 23°C and 50% RH for 7 days, giving 2 mm thick rubber sheets. At this time, the tack-free time (time until dry to the touch) was measured according to the method specified in JIS A 5758, and the rubber properties (type A durometer hardness, elongation at break, tensile strength) for the 2 mm thick sheets were measured according to JIS K 6249.

The test method for initial sealability (pressure resistance) involved carrying out a pressure resistance test using, as the test apparatus, a pressure vessel similar to the flange pressure vessel for pressure resistance testing specified in JIS K 6820. The pressure vessel was made up of an upper vessel having an upper flange with an inside diameter of 58 mm, an outside diameter of 80 mm and a thickness of 10 mm and a lower vessel having a lower flange of the same dimensions as the upper flange. A ring-like notch having a width of 3 mm and a depth of 3 mm was provided along the periphery on the inner edge of the seal face of the lower flange. This lower flange seal face was cleaned with toluene. Next, the composition was applied as a bead to the center portion of the lower flange seal face in an amount that will thoroughly fill the seal face. Immediately following application, the upper vessel was placed on the lower vessel in such a way that the seal faces of the upper flange and the lower flange came into touching contact, an iron spacer having a height of 20.50 mm (in the flange thickness direction) for setting the distance between the seal faces of the upper and lower flanges was installed, and four tightening bolts were attached. Due to this spacer, a gap of 0.5 mm formed between the seal faces. This was for accelerated testing that further intensifies the pressure resistance test on the sealing material. Next, 30 minutes of curing was carried out at 23°C and 50% RH, following which a gas was injected from a pressurizing port on the top side and the gas pressure that the cured composition serving as sealing material can withstand was measured.

Also, shear bond strength test specimens were fabricated by curing each of Compositions 1 to 7 at 23°C and 50% RH for 7 days between two aluminum plates having widths of 25 mm and lengths of 100 mm to form in each case a cured silicone rubber layer having a bonding surface area of 2.5 cm² with each of the top and bottom aluminum plates and an adhesive thickness of 1 mm. Using each of these test specimens, the shear bond strength and cohesive failure rate with respect to aluminum were measured in accordance with the methods specified in JIS K 6249, and the cohesive failure rates were compared.

Moreover, in order to confirm the chemical resistance (silicone oil resistance), each of the cured silicone rubber sheets and each of the shear bond strength test specimens obtained was subjected to deterioration by 10 days of immersion at 120°C in dimethyl silicone oil having a kinematic viscosity of 2 mm²/s (available under the trade name KF-96-2cs from Shin-Etsu Chemical Co., Ltd.), after which chemical resistance verification tests following silicone oil immersion were carried out by performing the same tests as initially upon production (rubber properties (type A durometer hardness, elongation at break, tensile strength), shear bond strength and cohesive failure rate measurement).

The results are presented in Table 1 below.

**[Table 1]**

| | | Example | | | | Comparative Example | | |
|---|---|---|---|---|---|---|---|---|
| | | 1 | 2 | 3 | 4 | 1 | 2 | 3 |
| Tack-free time (minutes) | | 5 | 4 | 7 | 7 | 3 | 3 | 5 |
| Initial sealability (kPa) | | 210 | 320 | 140 | 60 | 280 | ≥400 | 160 |
| Hardness (Type A) | Initially upon production | 21 | 19 | 19 | 35 | 40 | 38 | 39 |
| | After silicone oil immersion | 13 | 14 | 12 | 25 | not measure-able | not measure-able | not measure-able |
| Elongation at break (%) | Initially upon production | 520 | 460 | 480 | 390 | 360 | 320 | 340 |
| | After silicone oil immersion | 340 | 290 | 410 | 400 | 140 | 90 | 120 |
| Tensile strength (MPa) | Initially upon production | 1.9 | 1.8 | 1.6 | 1.8 | 1.8 | 1.6 | 1.6 |
| | After silicone oil immersion | 1.2 | 1.4 | 1.5 | 1.3 | 0.31 | 0.21 | 0.39 |
| Shear bond strength to aluminum (MPa) | Initially upon production | 1.1 | 1.3 | 1.2 | 1.6 | 1.4 | 1.3 | 1.3 |
| | After silicone oil immersion | 1.1 | 1.2 | 1.1 | 1.2 | 0.11 | 0.13 | 0.09 |
| Cohesive failure rate (%) | Initially upon production | 100 | 100 | 100 | 100 | 100 | 100 | 100 |
| | After silicone oil immersion | 100 | 100 | 100 | 80 | 0 | 0 | 0 |

Good rubber properties, adhesion and silicone oil resistance were exhibited in each of Examples 1 to 4, which used a prescribed polyoxyalkylene compound as the base polymer. In Examples 1 to 3, excellent results were obtained for initial sealability as well. On the other hand, in Comparative Examples 1 to 3 which used a reactive silicone oil (dimethylpolysiloxane having silanol groups at both ends of the molecular chain) as the base polymer, the initial sealability and initial physical properties (rubber properties, adhesion) were good, but following immersion in silicone oil (chemical resistance test), softening and deterioration occurred and the hardness became impossible to measure. Hence, the sealing material itself underwent considerable deterioration, making it unsuitable as a sealing material for coolant fluids that use silicone oils.

The foregoing results demonstrate that the room temperature-curable compositions having an excellent silicone oil resistance of the invention are effective as coolant sealing materials when a silicone oil is used as the coolant.

## Claims

1. A room temperature-curable composition comprising:
(A) 100 parts by weight of a polyoxyalkylene compound of structural formula (1) or (2) below 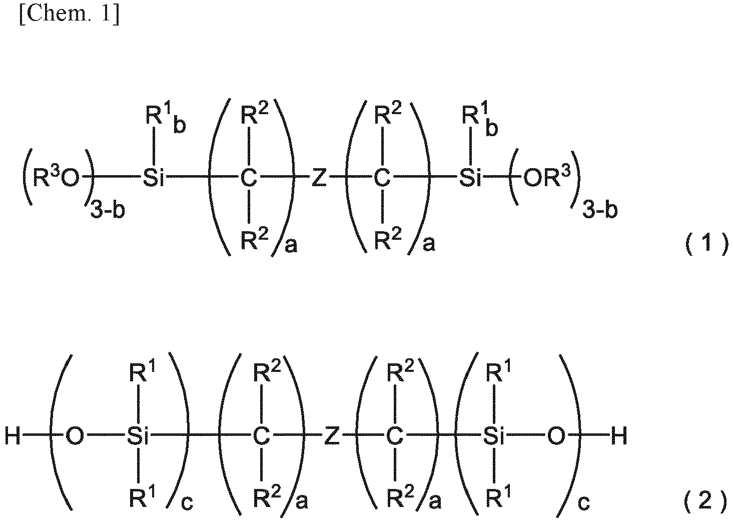 (wherein R¹ and R³, each of which may be the same or different, are substituted or unsubstituted monovalent hydrocarbon groups of 1 to 20 carbon atoms; each R² is independently a substituted or unsubstituted monovalent hydrocarbon group of 1 to 20 carbon atoms or a hydrogen atom; each occurrence of 'a' is independently an integer of 2 or more; each occurrence of 'b' is independently 0, 1 or 2; each occurrence of 'c' is independently an integer of 1 or more; and Z is a polyoxyalkylene polymer serving as a main chain);
(B) from 1 to 500 parts by weight of an inorganic filler;
(C) from 0.1 to 30 parts by weight of a hydrolyzable (organo)silane compound of general formula (3) below and/or a partial hydrolytic condensate thereof
R⁴_{d}SiX_{4-d} (3)
(wherein R⁴ is an unsubstituted monovalent hydrocarbon group, X is a hydrolyzable group, and 'd' is 0 or 1);
(D) from 0.01 to 10 parts by weight of a silane coupling agent of general formula (4) below and/or a partial hydrolytic condensate thereof
R⁵R⁷ₑSi(OR⁶)₃₋ₑ (4)
(wherein R⁵ is a monovalent hydrocarbon group of 1 to 20 carbon atoms which has at least one functional group containing one or more atom selected from the group consisting of nitrogen, sulfur and oxygen atoms; R⁶ and R⁷ are each independently a substituted or unsubstituted monovalent hydrocarbon group of 1 to 10 carbon atoms; and 'e' is 0, 1 or 2); and
(E) from 0.1 to 10 parts by weight of a curing catalyst.

2. The room temperature-curable composition of claim 1, wherein X in formula (3) is an alkoxy or alkoxyalkoxy group when component (A) is a compound of formula (1), and is a ketoxime, alkoxy, alkoxyalkoxy, acyloxy or alkenyloxy group when component (A) is a compound of formula (2).

3. The room temperature-curable composition of claim 1 or 2, wherein Z in formula (1) or (2) is a polyoxyalkylene polymer of formula (6) below 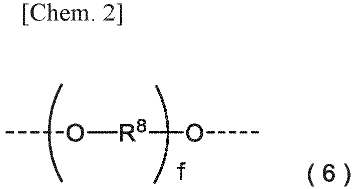 (wherein each R⁸, which may be the same or different, is a divalent hydrocarbon group; 'f' is an integer of 2 or more; and the dashed lines represent sites available for bonding).

4. The room temperature-curable composition of any one of claims 1 to 3, wherein the polyoxyalkylene compound (A) has a number-average molecular weight of from 500 to 100,000.

5. The room temperature-curable composition of any one of claims 1 to 4, wherein the inorganic filler (B) is of at least one type selected from the group consisting of calcium carbonate, fumed silica, precipitated silica, carbon black and aluminum oxide that has been treated with a surface treatment agent.

6. The room temperature-curable composition of any one of claims 1 to 5 for sealing an automotive coolant.

7. An automotive coolant sealing material comprising a cured form of the room temperature-curable composition for sealing an automotive coolant of claim 6.
